**Europäisches Patentamt**

**European Patent Office**

**Office européen des brevets**

(19)

(11) Numéro de publication : **0 040 571**
**B1**

(12)

# FASCICULE DE BREVET EUROPÉEN

(45) Date de publication du fascicule du brevet :
**07.11.84**

(51) Int. Cl.³ : **B 65 G 57/30**

(21) Numéro de dépôt : **81400779.5**

(22) Date de dépôt : **18.05.81**

(54) **Gerbeur pour empiler des produits circulant les uns à la suite des autres le long d'une voie de transport.**

(30) Priorité : **19.05.80 FR 8011122**

(43) Date de publication de la demande :
**25.11.81 Bulletin 81/47**

(45) Mention de la délivrance du brevet :
**07.11.84 Bulletin 84/45**

(84) Etats contractants désignés :
**AT BE CH DE GB IT LI LU NL SE**

(56) Documents cités :
**FR-A- 1 494 910**
**FR-A- 2 075 832**
**US-A- 3 190 466**
**US-A- 3 343 694**

(73) Titulaire : **Cotard, Didier Alain Jean**
**Le Bourg Montpinchon**
**F-50210 Cerisy La Salle (FR)**

(72) Inventeur : **Cotard, Didier Alain Jean**
**Le Bourg Montpinchon**
**F-50210 Cerisy La Salle (FR)**
Inventeur : **Morin, Michel**
**Le Bourg Montpinchon**
**F-50210 Cerisy La Salle (FR)**

(74) Mandataire : **Lemoine, Robert et al**
**Cabinet Malémont 42, Avenue du Président Wilson**
**F-75116 Paris (FR)**

## Description

La présente invention concerne un gerbeur pour empiler des produits composés chacun d'une plaque supportant un objet, du type comprenant deux bâtis disposés de part et d'autre d'une voie de transport le long de laquelle les produits circulent les uns à la suite des autres ; des moyens pour immobiliser les produits lorsqu'ils sont entre les bâtis ; deux chariots élévateurs déplaçables verticalement le long des bâtis, ces chariots se faisant face et comportant chacun des organes de levage comportant une aile de levage apte à s'avancer sous le produit immobilisé entre les bâtis, les organes de levage étant articulés autour d'un axe horizontal s'étendant parallèlement à la voie de transport et étant aptes à pivoter entre une position active dans laquelle ils sont en butée contre un arrêtoir fixé sur le chariot correspondant tandis que leur aile de levage s'avance horizontalement au-dessus de la voie de transport, et une position inactive dans laquelle ils sont éloignés de l'arrêtoir tandis que leur aile de levage s'étend à l'extérieur de la voie de transport ; et des moyens d'entraînement pour communiquer cycliquement aux chariots un mouvement ascendant au cours duquel leurs organes de levage soulèvent le produit immobilisé à une hauteur suffisante pour permettre l'arrivée et l'arrêt d'un nouveau produit entre les bâtis, puis un mouvement descendant au cours duquel leurs organes de levage déposent le produit soulevé sur le nouveau produit et viennent ensuite sous celui-ci.

Le document FR-A-1 494 910 décrit un gerbeur de ce type dont les organes de levage pivotent entre leur position active et leur position inactive sous la commande de galets de roulement se déplaçant suivant des trajectoires tortueuses définies par des rampes droites, des cames et des volets escamotables.

La solution proposée dans ce document pour commander les organes de levage ne donne toutefois pas entière satisfaction car elle aboutit à la réalisation d'un gerbeur complexe et onéreux.

La présente invention se propose de remédier à ces inconvénients et, pour ce faire, elle a pour objet un gerbeur du type susmentionné qui se caractérise en ce que l'axe de pivotement des organes de levage d'un même chariot est pourvu d'un ergot radial apte à coopérer avec une came de contournement montée pivotante sur le bâti correspondant, autour d'un axe perpendiculaire à l'axe de pivotement des organes de levage ; et en ce que la came de contournement est sollicitée élastiquement contre une butée prévue sur ledit bâti correspondant, la butée étant disposée de telle sorte que, pendant le mouvement descendant du chariot correspondant, l'ergot correspondant provoque le déplacement des organes de levage dans leur position inactive quand il rencontre la came de contournement qui est immobilisée contre la butée, et que pendant le mouvement ascendant du chariot correspondant, l'ergot associé provoque le pivotement de la came de contournement autour de l'axe de façon à l'éloigner de la butée et à l'escamoter.

Pendant le mouvement descendant des chariots, les organes de levage peuvent donc, grâce aux cames de contournement, pivoter vers leur position inactive avant qu'ils rencontrent la plaque du nouveau produit. Celle-ci se trouve donc protégée contre les détériorations que pourrait lui causer l'aile portante des organes de levage en glissant contre elle.

Par ailleurs, pendant le mouvement ascendant des chariots, les ergots ne risquent pas d'être détériorés par les cames de contournement puisque celles-ci sont escamotables.

Selon un mode de réalisation préféré de l'invention, les moyens d'entraînement sont constitués par deux ensembles de cames identiques et sur lesquels reposent les chariots, chaque ensemble prenant appui sur une entretoise horizontale prévue sur le bâti correspondant et comportant deux cames calées chacune sur un levier formant l'un des côtés transversaux d'un parallélogramme déformable, et par un vérin s'étendant parallèlement à la voie de transport, ce vérin étant interposé entre un socle fixe et un bras de liaison reliant les deux parallélogrammes déformables.

Grâce à cet ensemble de dispositions, les deux chariots se déplacent en parfait synchronisme, ce qui garantit un bon fonctionnement du gerbeur.

Avantageusement, les moyens d'entraînement soulèvent les chariots à l'encontre de l'action exercée par des ressorts de traction, interposés entre ceux-ci et la partie inférieure des bâtis. De tels ressorts facilitent donc la descente des chariots vers leur position basse.

Le gerbeur selon la présente invention se caractérise en outre en ce qu'il comporte des moyens pour pousser la pile de produits lorsqu'elle atteint une hauteur prédéterminée, ces moyens amenant la pile en aval des bâtis en la déplaçant le long de la voie de transport.

De préférence, les moyens pour pousser la pile comportent au moins un taquet déplaçable alternativement le long de la partie de la voie de transport située entre les bâtis, ce taquet s'élevant au-dessus de la plaque du produit reposant sur la voie de transport et étant susceptible de s'escamoter quand il se déplace dans le sens dans lequel il n'exerce pas son action de poussée.

Selon un mode de réalisation particulier, le taquet est articulé à l'une des extrémités d'une crémaillère longeant la voie de transport et déplaçable parallèlement à celle-ci sous l'action d'un organe moteur en prise avec elle.

Le gerbeur selon la présente invention se caractérise par ailleurs en ce que les moyens prévus pour immobiliser les produits entre les bâtis sont constitués par des butées fixées à l'extrémité antérieure de chaque chariot, ces butées étant devant la plaque du produit à immobiliser lorsque les chariots sont dans leur position haute, et sous la voie de transport lorsque ceux-ci sont dans leur position basse.

Selon une autre caractéristique du gerbeur selon la présente invention, les deux bâtis comportent chacun deux montants verticaux constitués par des profilés en U dont les ailes sont parallèles entre elles et se font face, tandis que les chariots sont constitués chacun par un longeron horizontal dont les extrémités portent des galets de roulement coopérant avec les ailes des montants verticaux du bâti correspondant.

Un mode d'exécution de la présente invention sera décrit ci-après à titre d'exemple nullement limitatif en référence aux dessins annexés dans lesquels :

la figure 1 est une vue de face d'un gerbeur conforme à l'invention dont les chariots sont représentés dans leur position basse ;

la figure 2 est une vue analogue à la figure 1 mais dans laquelle les chariots sont dans leur position haute ;

la figure 3 est une vue analogue à la figure 1 mais dans laquelle une pile de produits est en cours de déplacement le long de la voie de transport ;

la figure 4 est une vue en coupe effectuée selon la ligne IV-IV de la figure 2 ;

la figure 5 est une vue en perspective d'une came de contournement ;

les figures 6 à 9 sont des vues de côté partielles et à échelle agrandie, ces vues étant effectuées selon la ligne A-A de la figure 1 et montrant l'un des chariots dans quatre positions différentes ; et

la figure 10 est une vue partielle effectuée selon la ligne B-B de la figure 9.

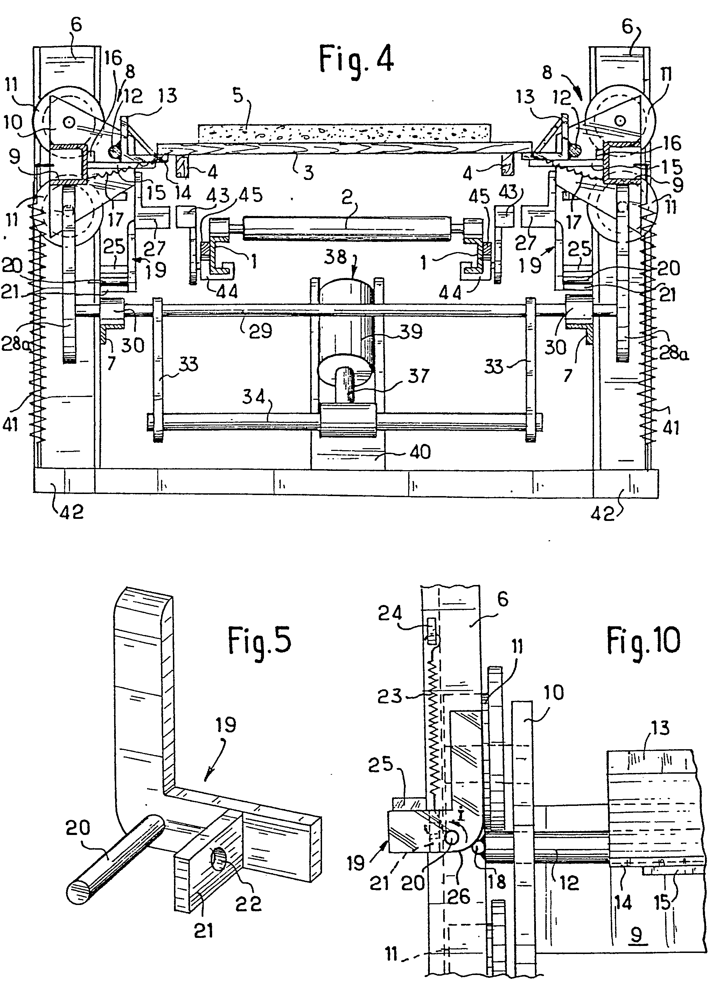

Le gerbeur selon l'invention est plus particulièrement destiné à empiler des objets moulés en béton reposant sur une plaque de démoulage, ces objets pouvant par exemple être constitués par des dalles, des poteaux de clôture, etc... Il est utilisé conjointement avec une voie de transport comprenant essentiellement deux longerons parallèles 1 s'étendant horizontalement et portant des rouleaux 2 sur lesquels les produits à empiler circulent les uns à la suite des autres dans le sens de la flèche F. Dans l'exemple représenté, les produits sont constitués par une planche de démoulage 3 pourvue de pieds 4 et par une dalle 5 reposant sur la planche. En se référant en particulier à la figure 4, on remarquera que l'écartement des pieds 4 est supérieur à celui des longerons 1 et qu'ainsi les planches 3 peuvent reposer sur les rouleaux par l'intermédiaire de leur face inférieure.

Le gerbeur comprend tout d'abord deux bâtis identiques disposés de part et d'autre de la voie de transport, chaque bâti comprenant deux montants verticaux 6 reliés au-dessous de leur partie centrale par une entretoise horizontale 7 et constitués par des profilés en U implantés au sol de telle manière que leurs ailes soient parallèles entre elles et tournées les unes vers les autres.

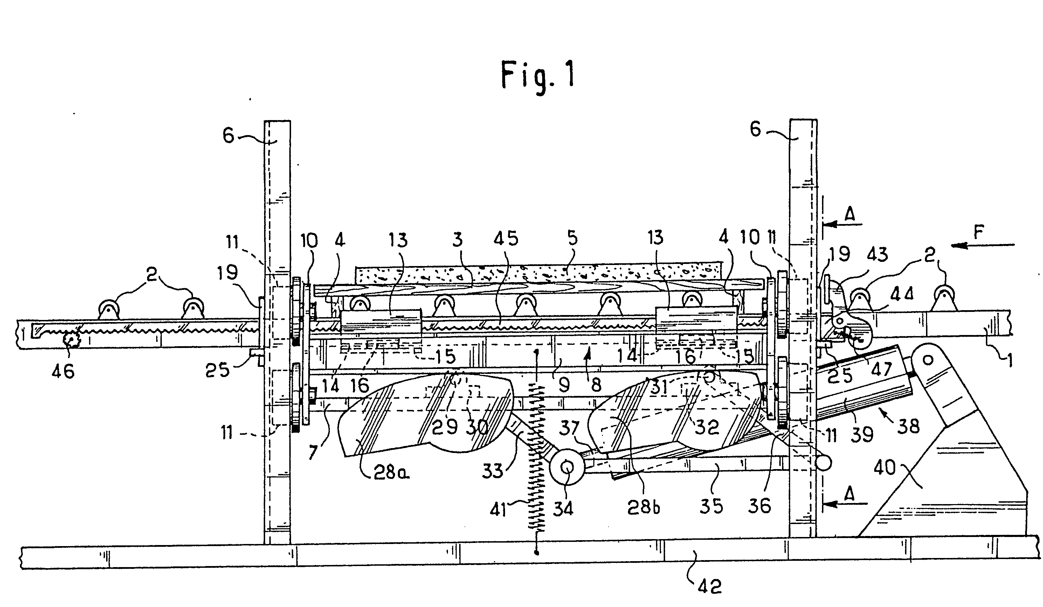

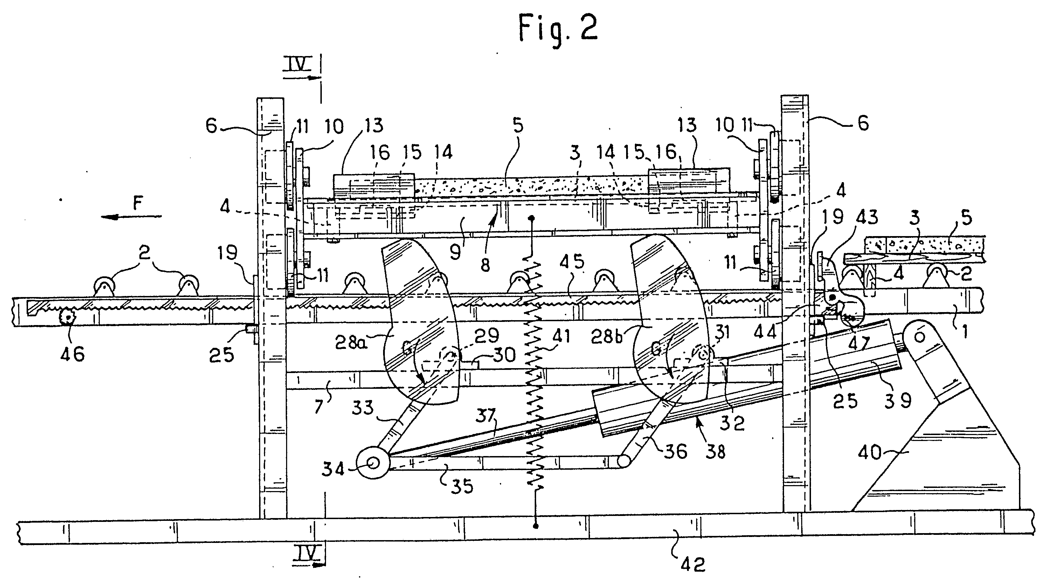

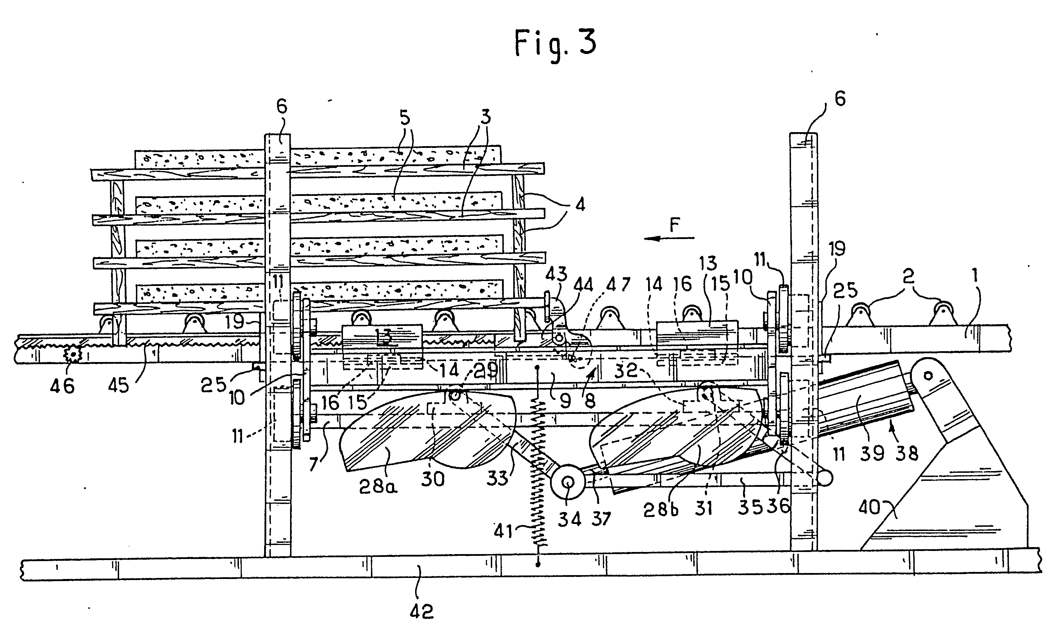

Le gerbeur comprend également deux chariots élévateurs 8 déplaçables le long des bâtis entre une position basse visible sur les figures 1 et 3 et une position haute visible sur la figure 2. Chacun de ces chariots est constitué par un longeron horizontal 9 aux extrémités duquel sont fixées deux plaques 10 portant chacune deux galets de roulement 11 coopérant avec les ailes du montant 6 correspondant.

En se référant en particulier à la figure 4, on remarquera que les longerons 9 sont des profilés en U dont les branches sont tournées vers l'extérieur par rapport à la voie de transport et que les plaques 10 se présentent sous la forme de trapèzes dont la grande base est dans le plan contenant les extrémités des ailes du longeron associé 9 et dont la petite base s'avance dans l'espace délimité entre les deux bâtis du gerbeur.

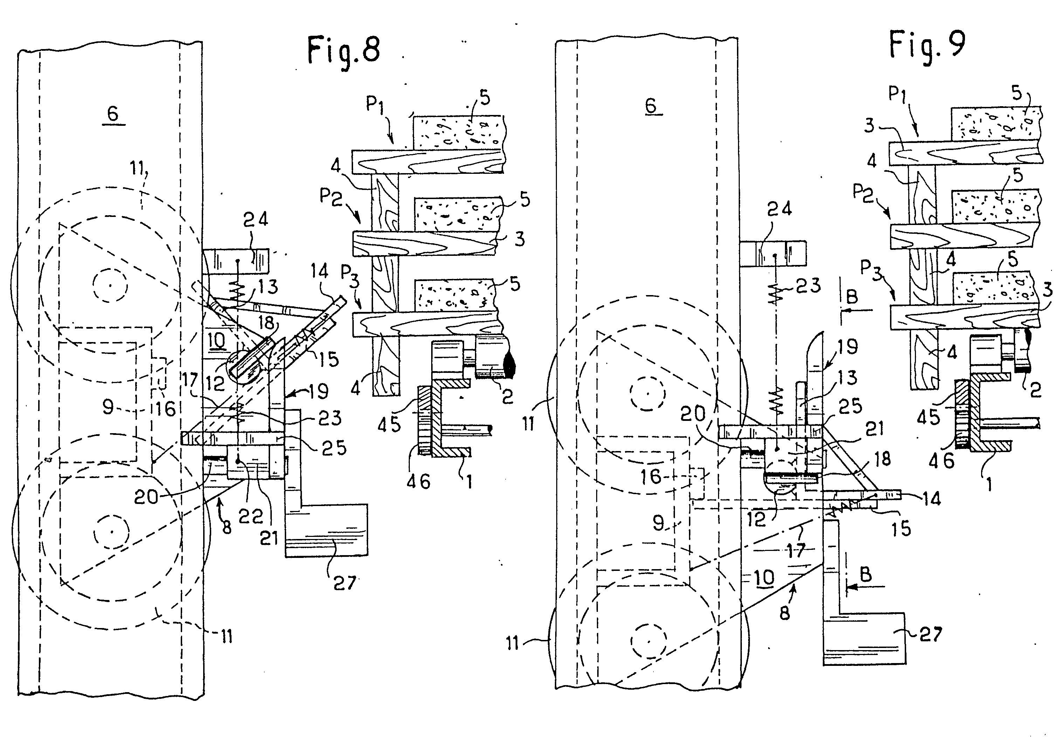

Les plaques d'extrémité 10 de chaque chariot supportent, à proximité de leur petite base, un arbre horizontal 12 s'étendant parallèlement à la voie de transport. Cet arbre, qui sert de support à deux cornières 13 comportant chacune une aile de levage 14 et un taquet d'immobilisation 15, peut tourillonner dans les plaques 10 et permettre aux cornières de pivoter entre une position active (visible par exemple sur la figure 4) dans laquelle leur aile 14 s'avance horizontalement au-dessus de la voie de transport tandis que leur taquet 15 est en butée contre un arrêtoir 16 fixé sur la base du longeron 9, et une position inactive (visible sur la figure 8) dans laquelle leur aile 14 est à l'extérieur de la voie de transport tandis que leur taquet 15 est au-dessous de l'arrêtoir 16.

Des ressorts de traction 17 dont les extrémités sont respectivement fixées sur la base du longeron 9 et sur l'aile 14 des cornières sont prévus pour rappeler ces derniers dans leur position active.

En se référant plus particulièrement à la figure 10, on notera que l'arbre 12 se prolonge au-delà des plaques d'extrémité 10 et qu'il porte à chacune de ses extrémités un ergot radial 18 faisant saillie en direction de la voie de transport de manière à pouvoir coopérer avec une came de contournement 19 montée pivotante sur l'aile du montant 6 correspondant qui est tournée vers la voie de transport.

Comme on peut le voir clairement sur les figures 5 et 10, les cames de contournement 19 sont constituées par une plaque en L, s'étendant parallèlement au montant 6. Sur sa face tournée vers le montant 6, cette plaque porte un axe 20 par l'intermédiaire duquel elle peut être montée pivotante sur le montant 6 et une protubérance 21 pourvue d'un perçage 22 destiné à recevoir l'une des extrémités d'un ressort de traction 23 dont l'autre extrémité est accrochée sur une patte 24 fixée sur le montant 6. Grâce au ressort 23, la petite branche de la plaque est rappelée contre une butée 25 fixée sur la face externe de la base du montant 6 et s'étend alors horizontalement.

En se référant en particulier à la figure 10, on remarquera que l'axe 20 est fixé au niveau de la jonction des deux branches de la plaque et qu'un arrondi 26 assure le raccordement des tranches extérieures de ces deux branches.

Les cames de contournement 19 sont fixées sur les montants 6 à une hauteur telle que les ergots 18 des arbres 12 rencontrent leurs grandes branches lorsque les chariots sont dans une position voisine de leur position basse. La coopération entre les ergots 18 et les cames de contournement 19 sera toutefois exposée plus en détail ci-après lors de la description du fonctionnement du gerbeur et il n'est donc pas nécessaire de la décrire plus avant ici.

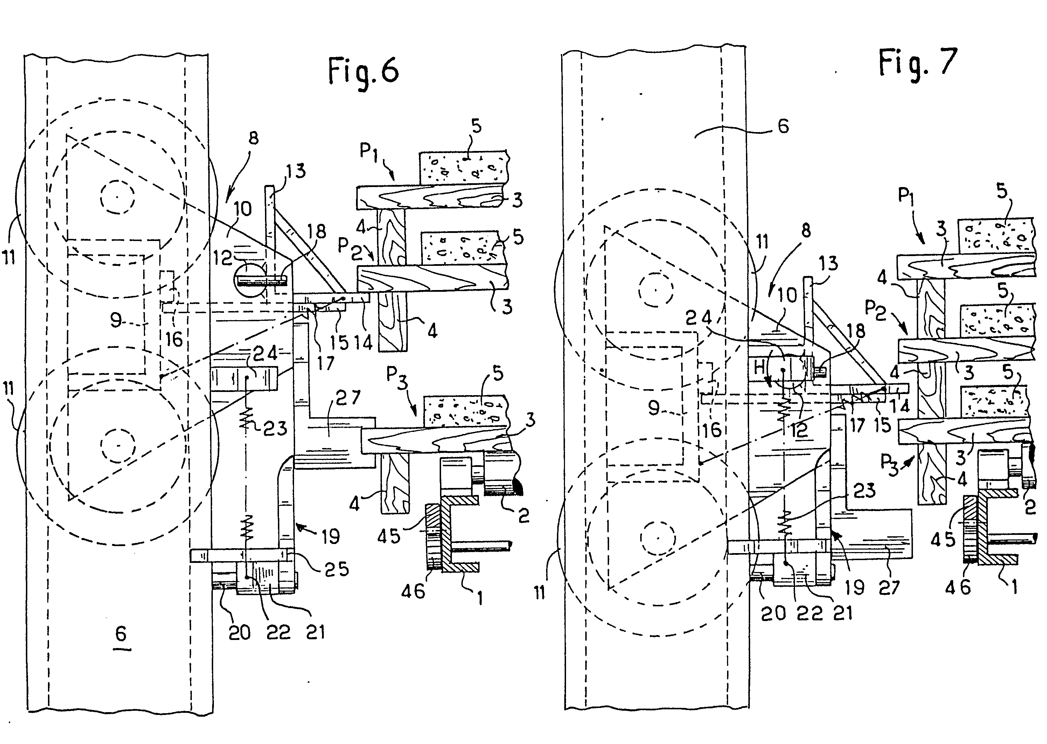

Pour être complet, on précisera encore que chaque chariot porte sur sa plaque antérieure 10 (celle qui est en aval) une butée 27 particulièrement bien visible sur les figures 6 à 9. Cette butée qui est perpendiculaire à la voie de transport, s'avance devant la plaque 3 du produit se trouvant entre les bâtis du gerbeur lorsque les chariots 8 sont dans leur position haute (figure 6) et descend sous la voie de transport lorsque ceux-ci s'éloignent de leur position haute (figures 7 à 9).

Grâce aux butées 27, le produit qui arrive entre les bâtis du gerbeur, lorsque les chariots sont en position haute, peut donc être immobilisé dans une position précise.

Les moyens permettant de déplacer les chariots 8 le long des montants 6 seront maintenant décrits en référence aux figures 1 à 4.

Comme on peut le voir sur ces figures, le longeron 9 de chaque chariot repose sur deux cames identiques 28a, 28b s'étendant parallèlement à la voie de transport. Les cames 28a sont fixées aux extrémités d'un arbre transversal 29 reposant sur des paliers 30 montés sur les entretoises 7 des deux bâtis du gerbeur. De même les cames 28b sont fixées aux extrémités d'un autre arbre transversal 31 reposant sur des paliers 32 montés sur les entretoises 7.

Deux leviers parallèles 33, dont les extrémités supérieures sont solidaires de l'arbre 29, sont articulés sur un bras de liaison 34 reliant leur extrémité inférieure. Ils sont en outre articulés à l'une des extrémités d'une bielle 35 s'étendant parallèlement à l'entretoise 7 correspondante, l'autre extrémité de cette bielle étant articulée quant à elle à l'extrémité inférieure d'un levier 36 dont l'extrémité supérieure est calée sur l'arbre 31.

Les leviers 33 et 36 sont identiques et forment les côtés transversaux de deux parallélogrammes déformables dont les côtés longitudinaux sont constitués par les bielles 35 et les entre-axes des arbres 29 et 31.

Comme le montre la figure 4, le bras de liaison 34 est attelé à la tige 37 d'un vérin 38 dont le cylindre 39 est articulé sur un socle 40 fixé sous la voie de transport. Le vérin 38 s'étend parallèlement à celle-ci. Lorsqu'il est actionné, il provoque la déformation des deux parallélogrammes, ce qui oblige les cames 28a et 28b à pivoter entre leurs positions extrêmes visibles respectivement sur les figures 1 et 3 et sur la figure 2.

On notera ici que les cames 28a et 28b présentent une surface de came suffisamment longue pour qu'en position haute des chariots 8, un produit puisse être avancé entre les montants 6 des bâtis sans risquer d'être gêné par le produit qui est supporté par les ailes de levage 14 des cornières 13.

Dans l'exemple représenté, on remarquera par ailleurs que deux ressorts de traction 41 sont tendus verticalement entre les chariots et des poutrelles 42 sur lesquelles reposent les montants 6. Grâce à ces ressorts, les chariots peuvent donc revenir plus facilement dans leur position basse lorsque les cames pivotent de leur position visible sur la figure 2 à celle visible sur les figures 1 et 3.

Le gerbeur conforme à l'invention comporte également deux taquets pousseurs 43 déplaçables alternativement le long des longerons 1 de la voie de transport, entre une position rétractée (visible sur les figures 1 et 2) dans laquelle ils sont en amont des deux bâtis et une position avancée (non représentée) dans laquelle ils sont en aval desdits bâtis.

Ces taquets sont articulés sur des coulisseaux 44 coopérant avec l'aile inférieure des longerons 1 (voir en particulier la figure 4), chacun de ces coulisseaux étant fixé à l'extrémité postérieure (ou amont) d'une crémaillère horizontale 45 longeant la paroi verticale d'un longeron 1 et dont les dents sont en prise avec un pignon 46 situé en aval des bâtis.

On notera ici que les pignons 46, qui sont identiques, sont calés sur un arbre de liaison susceptible de tourner sous la commande d'un moteur classique non représenté.

Les taquets 43 s'élèvent au-dessus des plaques des différents produits se trouvant sur la voie de transport et sont maintenus dans leur position saillante grâce à un ressort de rappel 47 les reliant à leur coulisseau respectif. Ce montage a l'avantage de leur permettre de s'escamoter soit lorsqu'une plaque 3, en se déplaçant dans le sens de la flèche F, passe au-dessus d'eux, soit lorsqu'ils reviennent dans leur position rétractée alors qu'une plaque 3 est déjà entre les montants 6.

On va maintenant décrire le fonctionnement du gerbeur selon l'invention en supposant que les chariots 8 sont dans leur position haute visible sur la figure 2 et que la pile de produits qui est en cours de formation ne comporte que deux produits $P_1$ et $P_2$ superposés, comme représenté sur la figure 6.

Dans cette position des chariots 8, les cornières 13 sont dans leur position active. En effet, leurs taquets d'immobilisation 15 sont en butée contre les arrêtoirs 16 tandis que leurs ailes de levage 14 s'étendent horizontalement et s'avancent sous les côtés longitudinaux de la plaque 3 du produit inférieur $P_2$.

Par ailleurs, les butées 27 prévues à l'extrémité antérieure des chariots 8 font saillie devant la plaque 3 du produit $P_3$ qu'elles ont immobilisé entre les montants 6, celui-ci ayant pu passer librement sous le produit $P_2$ dont la hauteur de levage, déterminée par la longueur des surfaces de came des cames 28a et 28b, est suffisante pour autoriser ce passage.

Le vérin 38 est maintenant actionné de façon à ce que sa tige se rétracte. Celle-ci tire alors le bras de liaison 34 en direction du socle 40, ce qui provoque la déformation des parallélogrammes et permet aux cames 28a et 28b de pivoter dans le sens des flèches G visibles sur la figure 2. Les chariots amorcent donc leur descente avec l'assistance des ressorts 41 qui les contraignent à rester au contact des surfaces de came des cames 28a et 28b.

Lorsque le produit $P_2$ repose sur le produit $P_3$, les cornières 13 restent dans leur position active sous l'action des ressorts 17 et ce bien qu'elles ne soient plus au contact de la plaque 3 du produit $P_2$ (voir la figure 7). Puis, pendant que les chariots continuent à descendre, les ergots 18 des arbres 12 rencontrent l'aile verticale de contournement 19 qui sont immobilisées contre les butées 25. Comme les cames 19 ne peuvent s'escamoter, les ergots 18 contraignent les arbres 12 à pivoter dans le sens de la flèche H sur la figure 7. Par suite, les cornières 13 viennent dans leur position inactive représentée sur la figure 8 et contournent ainsi la plaque 3 du produit $P_3$ sans la toucher.

Comme les chariots 8 continuent à descendre, les ergots 18 glissent contre l'aile verticale des cames de contournement 19 en maintenant les cornières dans leur position inactive. Puis, lorsque les chariots atteignent leur position basse visible sur les figures 1 et 3, les ergots 18 se trouvent sous les cames de contournement tandis que les cornières reviennent dans leur position active sous l'action des ressorts 17, leurs ailes de levage 14 étant alors sous les côtés longitudinaux de la plaque du produit $P_3$, comme représenté sur la figure 9.

Le vérin 38 est maintenant actionné en sens inverse et permet ainsi aux chariots 8 de commencer leur mouvement ascendant. Les ergots 18 rencontrent immédiatement l'arrondi 26 des cames de contournement 19 et obligent celles-ci à s'escamoter à l'encontre de la force de rappel des ressorts 23, en pivotant autour de leur axe 20, dans le sens de la flèche I (voir la figure 10). Les cames 19 évitent donc ainsi que les ergots 18 et les cornières 13 soient soumis à un couple résistant anormal.

Pendant que les chariots continuent à s'élever, les ailes portantes 14 des cornières viennent ensuite contre la face inférieure de la plaque du produit $P_3$, puis soulèvent l'ensemble des produits $P_1$, $P_2$, $P_3$, cet ensemble étant élevé jusqu'à ce que les chariots atteignent à nouveau leur position haute.

Un nouveau produit peut maintenant être avancé le long de la voie de transport et amené entre les bâtis du gerbeur où les butées 27 des chariots assureront son immobilisation. Les chariots sont prêts à redescendre afin que leurs cornières puissent prendre en charge ce nouveau produit qui constituera alors l'élément inférieur de la pile en cours de formation.

La commande du vérin 38 et l'arrivée des produits entre les bâtis peut bien entendu être entièrement automatisée, ce qui permet aux chariots 8 de se déplacer continuellement entre leurs positions basse et haute et donc à la pile de produits de se former sans aucune intervention manuelle.

Puis, quand la pile de produits atteint la hauteur souhaitée, le vérin 38 cesse d'être actionné dès que les chariots 8 arrivent dans leur position basse tandis que le moteur d'entraînement des pignons 46 se met en route afin de déplacer les crémaillères 45 dans le sens de la flèche F. Les taquets 43 poussent alors la pile de produits jusqu'à ce qu'elle soit en aval des bâtis du gerbeur. Lorsque cette opération de poussée est terminée, les pignons 46 sont entraînés en sens inverse afin de ramener les taquets 43 dans leur position rétractée visible sur les figures 1 et 2.

Ainsi, le gerbeur est prêt pour réaliser une nouvelle pile de produits.

Le déclenchement du moteur commandant la rotation des pignons 46 pourra bien entendu être assuré automatiquement, par exemple en fonction de signaux fournis par des fins-de-course ou des dispositifs de comptage réglés sur le nombre de produits que doivent comporter les piles à réaliser.

Pour être complet, on précisera que les plaques 3 pourraient être dépourvues de pieds. Dans ce cas, elles reposeraient alors directement sur la face supérieure des produits de la pile qui seraient situés sous elles.

**Revendications**

1. Gerbeur pour empiler des produits composés chacun d'une plaque (3) supportant un objet (5), du type comprenant deux bâtis disposés de part et d'autre d'une voie de transport (1, 2) le long de laquelle les produits circulent les uns à la suite des autres ; des moyens (27) pour immobiliser les produits lorsqu'ils sont entre les bâtis ; deux chariots élévateurs (8) déplaçables verticalement le long des bâtis, ces chariots se faisant face et comportant chacun des organes de levage (13) comportant une aile de levage (14) apte à s'avancer sous le produit immobilisé entre les bâtis, les organes de levage (13) étant articulés autour d'un axe horizontal (12) s'étendant parallèlement à la voie de transport (1, 2) et étant aptes à pivoter entre une position active dans laquelle ils sont en butée contre un arrêtoir (16) fixé sur le chariot (8) correspondant tandis que leur aile de levage (14) s'avance horizontalement au-dessus de la voie de transport (1, 2), et une position inactive dans laquelle ils sont éloignés de l'arrêtoir (16) tandis que leur aile de levage (14) s'étend à l'extérieur de la voie de transport (1, 2) ; et des moyens d'entraînement pour communiquer cycliquement aux chariots un mouvement ascendant au cours duquel leurs organes de levage soulèvent le produit immobilisé à une hauteur suffisante pour permettre l'arrivée et l'arrêt d'un nouveau produit entre les bâtis, puis un mouvement descendant au cours duquel leurs organes de levage déposent le produit soulevé sur le nouveau produit et viennent ensuite sous celui-ci, caractérisé en ce que l'axe de pivotement (12) des organes de levage (13) d'un même chariot (8) est pourvu d'un ergot radial (18) apte à coopérer avec une came de contournement (19) montée pivotante sur le bâti correspondant, autour d'un axe (20) perpendiculaire à l'axe de pivotement (12) des organes de levage ; et en ce que la came de contournement (19) est sollicitée élastiquement contre une butée (25) prévue sur ledit bâti correspondant, la butée (25) étant disposée de telle sorte que, pendant le mouvement descendant du chariot (8) correspondant, l'ergot (18) correspondant provoque le déplacement des organes de levage (13) dans leur position inactive quand il rencontre la came de contournement (19) qui est immobilisée contre la butée (25), et que pendant le mouvement ascendant du chariot correspondant (8), l'ergot associé (18) provoque le pivotement de la came de contournement (19) autour de l'axe (20) de façon à l'éloigner de la butée (25) et à l'escamoter.

2. Gerbeur selon la revendication 1, caractérisé en ce que les moyens d'entraînement sont constitués par deux ensembles de cames (28a, 28b) identiques et sur lesquels reposent les chariots (8), chaque ensemble prenant appui sur une entretoise horizontale (7) prévue sur le bâti correspondant et comportant deux cames (28a, 28b) calées chacune sur un levier (33, resp. 36) formant l'un des côtés transversaux d'un parallélogramme déformable, et par un vérin (38) s'étendant parallèlement à la voie de transport (1, 2), ce vérin étant interposé entre un socle fixe (40) et un bras de liaison (34) reliant les deux parallélogrammes déformables.

3. Gerbeur selon la revendication 2, caractérisé en ce que le bras de liaison (34) s'étend entre les extrémités libres de deux leviers (33, resp. 36) qui se font face.

4. Gerbeur selon la revendication 2, caractérisé en ce que les moyens d'entraînement soulèvent les chariots (8) à l'encontre de l'action exercée par des ressorts de traction (41) interposés entre ceux-ci et la partie inférieure des bâtis.

5. Gerbeur selon l'une quelconque des revendications précédentes, caractérisé en ce qu'il comporte en outre des moyens (43) pour pousser la pile de produits lorsqu'elle atteint une hauteur prédéterminée, ces moyens amenant la pile en aval des bâtis en la déplaçant le long de la voie de transport (1, 2).

6. Gerbeur selon la revendication 5, caractérisé en ce que les moyens pour pousser la pile comportent au moins un taquet (43) déplaçable alternativement le long de la partie de la voie de transport (1, 2) située entre les bâtis, ce taquet s'élevant au-dessus de la plaque (3) du produit reposant sur la voie de transport et étant susceptible de s'escamoter quand il se déplace dans le sens dans lequel il n'exerce pas son action de poussée.

7. Gerbeur selon la revendication 6, caractérisé en ce que le taquet (43) est articulé à l'une des extrémités d'une crémaillère (45) longeant la voie de transport (1, 2) et déplaçable parallèlement à celle-ci sous l'action d'un organe moteur (46) en prise avec elle.

8. Gerbeur selon l'une quelconque des revendications précédentes, caractérisé en outre en ce que les moyens pour immobiliser les produits entre les bâtis sont constitués par des butées (27) fixées à l'extrémité antérieure de chaque chariot (8) ; ces butées étant devant la plaque (3) du produit à immobiliser lorsque les chariots sont dans leur position haute et sous la voie de transport (1, 2) lorsque ceux-ci sont dans leur position basse.

9. Gerbeur selon la revendication 8, caractérisé en ce que ses deux bâtis comportent chacun deux montants verticaux (6) constitués par des profilés en U dont les ailes sont parallèles entre elles et se font face, et en ce que les chariots (8) sont constitués chacun par un longeron horizontal (9) dont les extrémités portent des galets de roulement (11) coopérant avec les ailes des montants verticaux (6) du bâti correspondant.

**Claims**

1. Stacker for stacking products each formed of a plate (3) supporting an object (5), of the type comprising two frames disposed on each side of a transport path (1, 2) along with the products travel one after the other ; means (27) for immobilizing the products when they are between the frames ; two lifting carriages (8) movable vertically along the frames, these carriages facing each other and each comprising lifting means (13) having a lifting arm (14) adapted to advance under the product immobilized between the frames, the lifting means (13) being hingedly mounted about a horizontal shaft (12) extending parallel to the transport path (1, 2) and being adapted for pivoting between an active position in which they are in abutment against a stop (16) fixed on the corresponding carriage (8) while their lifting arm (14) advances horizontally above the transport path (1, 2) and an inactive position in which they are distant from the stop (16) whereas their lifting arm (14) extends outside the transport path (1, 2) ; and drive means for communicating cyclically to the carriagesa rising movement during which their lifting means raise the immobilized product to a height sufficient to allow a new product to arrive and stop between the frames, then a downward movement during which their lifting means deposit the raised product on the new product and then come underneath this latter, characterized in that the pivoting shaft (12) of the lifting means (13) of the same carriage (8) is provided with a radial stud (18) adapted for cooperation with a by-pass cam (19) mounted for pivoting on the corresponding frame, about an axis (20) perpendicular to the pivoting shaft (12) of the lifting means ; and in that the by-pass cam (19) is urged resiliently against a stop (25) provided on said corresponding frame, the stop (25) being disposed so that, during the downward movement of the corresponding carriage (8), the corresponding stud (18) causes the lifting means (13) to move into their inactive position when it meets the by-pass cam (19) which is immobilized against the stop (25), and that during the upward movement of the corresponding carriages (8) the associated stud (18) causes the by-pass cam (19) to pivot about the axis (20) so as to move it away from the stop (25) and to retract it.

2. Stacker according to claim 1, characterized in that the drive means are formed by two identical sets of cams (28a, 28b), on which the carriages (8) rest, each set bearing on a horizontal strut (7) provided on the corresponding frame and comprising two cams (28a, 28b) each fixed on a lever (33 respectively 36) forming one of the transverse sides of a deformable parallelogram, and by an actuating cylinder (38) extending parallel to the transport path (1, 2), this cylinder being inserted between a fixed base (40) and a connecting arm (34) connecting the two deformable parallelograms together.

3. Stacker according to claim 2, characterized in that the connecting arm (34) extends between the free arms of the two facing levers (33 respectively 36).

4. Stacker according to claim 2, characterized in that the drive means raise the carriages (8) against the action exerted by traction springs (41) inserted between these latter and the lower part of the frames.

5. Stacker according to any of the preceding claims, characterized in that it further comprises means (43) for pushing the pile of products when it reaches a predetermined height, these means bringing the pile downstream of the frames while moving it along the transport path (1, 2).

6. Stacker according to claim 5, characterized in that the means for pushing the pile comprise at least one lug (43) reciprocally movable along the part of the transport path (1, 2) situated between the frames, this lug rising above the plate (3) of the product resting on the transport path and being retractable when it moves in the direction in which it does not exert its pushing action.

7. Stacker according to claim 6, characterized in that the lug (43) is hingedly mounted to one of the ends of a rack (45) extending along the transport path (1, 2) and movable parallel thereto under the action of a drive means (46) engaged therewith.

8. Stacker according to any one of the preceding claims, further characterized in that the means for immobilizing the products between the frames are formed by stops (27) fixed at the front end of each carriage (8) ; these stops being in front of the plate (3) of the product to be immobilized when the carriages are in their high position and under the transport path (1, 2) when these latter are in their low position.

9. Stacker according to claim 9, characterized in that the two frames thereof each comprise two vertical uprights (6) formed by channel sections whose flanges are parallel to each other and face each other, and in that the carriages are each formed by a horizontal side member (9) whose ends bear rollers (11) cooperating with the flanges of the vertical uprights (6) of the corresponding frame.

**Ansprüche**

1. Stapler zum Stapeln von Produkten, die jeweils aus einer einen Gegenstand (5) tragenden Platte (3) bestehen, mit zwei Gestellen, die beiderseits eines Transportweges (1, 2) angeordnet sind, längs welchem sich die Produkte hintereinander bewegen ; mit Vorrichtungen (27) zum Anhalten der Produkte, wenn sie zwischen den Gestellen sind ; mit zwei Hubwagen (8), die längs der Gestelle vertikal verfahrbar sind, sich einander gegenüberliegen und jeweils Hubglieder (13) aufweisen, die einen Hubschenkel (14) haben, welcher unter das zwischen den Gestellen angehaltene Produkt bewegbar ist, wobei die Hubglieder (13) um eine horizontale Achse (12) drehbar angelenkt sind, welche sich parallel zu dem Transportweg (1, 2) erstreckt, und zwischen einer aktiven Position, in der sie an einem Anschlag (16) anliegen, welcher an dem entsprechenden Wagen (8) befestigt ist, während sich ihr Hubschenkel (14) horizontal oberhalb des Transportweges (1, 2) bewegt, und einer inaktiven Position schwenkbar sind, in der sie von dem Anschlag (16) entfernt sind, während sich ihr Hubschenkel (14) außerhalb des Transportweges (1, 2) erstreckt ; und mit Antriebsvorrichtungen, um den Wagen periodisch eine Aufwärtsbewegung zu geben, während der ihre Hubglieder, das angehaltene Produkt in eine ausreichende Höhe heben, um die Ankunft und das Stoppen eines neuen Produkts zwischen den Gestellen zu gestatten, und dann ein Abwärtsbewegung, während der ihre Hubglieder das angehobene Produkt auf dem neuen Produkt absetzen und dann unter dieses gelangen, dadurch gekennzeichnet, daß die Schwenkachse (12) der Hubglieder (13) ein und desselben Wagens (8) mit einem radialen Vorsprung (18) versehen ist, der mit einem Umfahrungsnocken (19) zusammenwirken kann, welcher an dem entsprechenden Gestell schwenkbar um eine Achse (20), die zu der Schwenkachse (12) der Hubglieder rechtwinkelig ist, befestigt ist ; und daß der Umfahrungsnocken (19) elastisch gegen einen Anschlag (25) gezogen wird, welcher an dem entsprechenden Gestell vorgesehen ist, wobei der Anschlag (25) so angeordnet ist, daß während der Abwärtsbewegung des entsprechenden Wagens (8) der entsprechende Vorsprung (18) die Verschiebung der Hubglieder (13) in ihre inaktive Position bewirkt, wenn er auf den Umfahrungsnocken (19) trifft, der an dem Anschlag (25) anliegt, und daß während der Aufwärtsbewegung des entsprechenden Wagens (8) der zugeordnete Vorsprung (18) das Verschwenken des Umfahrungsnockens (19) um die Achse (20) bewirkt, um ihn von dem Anschlag (25) zu entfernen und ihn wegzuschwenken.

2. Stapler nach Anspruch 1, dadurch gekennzeichnet, daß die Antriebsvorrichtungen aus zwei gleichen Nockeneinrichtungen (28a, 28b) bestehen, auf denen die Wagen (8) ruhen, wobei sich jede Einrichtung auf einem horizontalen Träger (7) abstützt, der an dem entsprechenden Gestell vorgesehen ist, und zwei Nocken (28a, 28b) aufweist, welche jeweils mit einem Hebel (33 bzw. 36) verkeilt sind, der eine der Querseiten eines verformbaren Parallelogramms bildet, und aus einem Arbeitszylinder (38), der sich parallel zu dem Transportweg (1, 2) erstreckt und zwischen einem festen Sockel (40) und einem Verbindungsarm (34), welcher die beiden verformbaren Parallelogramme miteinander verbindet, angeordnet ist.

3. Stapler nach Anspruch 2, dadurch gekennzeichnet, daß sich der Verbindungsarm (34) zwischen den freien Enden der beiden Hebel (33 bzw. 36) erstreckt, die sich gegenüberliegen.

4. Stapler nach Anspruch 2, dadurch gekennzeichnet, daß die Antriebsvorrichtungen die Wagen (8) gegen eine Kraft anheben, welche durch Zugfedern (41) ausgeübt wird, die zwischen denselben und dem unteren Teil der Gestelle angeordnet sind.

5. Stapler nach einem der vorhergehenden Ansprüche, dadurch gekennzeichnet, daß er außerdem Vorrichtungen (43) aufweist zum Schieben des Produktstapels, wenn dieser eine vorbestimmte Höhe erreicht, wobei diese Vorrichtungen den Stapel hinter die Gestelle bringen, indem sie ihn längs des Transportweges (1, 2) verschieben.

6. Stapler nach Anspruch 5, dadurch gekennzeichnet, daß die Vorrichtungen zum Schieben des Stapels wenigstens einen Mitnehmer (43) aufweisen, der abwechselnd längs desjenigen Teils des Transportweges (1, 2) verschiebbar ist, welcher sich zwischen den Gestellen befindet, wobei sich dieser Mitnehmer oberhalb der Platte (3) des auf dem Transportweg ruhenden Produkts erstreckt und schwenkbar ist, wenn er sich in der Richtung verschiebt, in der er seine Schiebewirkung nicht ausübt.

7. Stapler nach Anspruch 6, dadurch gekennzeichnet, daß der Mitnehmer (43) an einem der Enden einer Zahnstange (45) drehbar angelenkt ist, die sich längs des Transportweges (1, 2) erstreckt und parallel zu diesem unter der Wirkung eines Antriebselements (46), welches mit ihr in Eingriff ist, verschiebbar ist.

8. Stapler nach einem der vorhergehenden Ansprüche, dadurch gekennzeichnet, daß die Vorrichtungen zum Anhalten der Produkte zwischen den Gestellen aus Anschlägen (27) bestehen, welche an dem vorderen Ende jedes Wagens (8) befestigt sind, wobei diese Anschläge vor der Platte (3) des anzuhaltenden Produkts sind, wenn die Wagen in ihrer oberen Position sind, und unter dem Transportweg (1, 2), wenn diese in ihrer unteren Position sind.

9. Stapler nach Anspruch 8, dadurch gekennzeichnet, daß seine beiden Gestelle jeweils zwei vertikale Pfosten (6) aufweisen, die aus U-Profilteilen bestehen, deren Schenkel parallel zueinander sind und sich gegenüberliegen, und daß die Wagen (8) jeweils aus einem horizontalen Träger (9) bestehen, dessen Enden Laufrollen (11) tragen, welche mit den Schenkeln der vertikalen Pfosten (6) des entsprechenden Gestelles zusammenwirken.

Fig. 1

Fig. 2

Fig. 3

0 040 571

Fig. 4

Fig. 5

Fig. 10

Fig. 7

Fig. 6

# Fig.8

# Fig.9

0 040 571